# EUROPÄISCHE PATENTSCHRIFT

(11) **EP 3 810 944 B1**
(45) Veröffentlichungstag und Bekanntmachung des Hinweises auf die Patenterteilung: **29.03.2023**
(21) Anmeldenummer: 19736962.2
(22) Anmeldetag: 06.06.2019
(51) Int. Cl.: F16C 19/46

(54) **AXIALWÄLZLAGER**
THRUST ROLLING BEARING
BUTÉE AXIALE A ROULEMENT

(30) Priorität: 25.06.2018 DE 102018115182
(43) Veröffentlichungstag der Anmeldung: 28.04.2021
(73) Patentinhaber: Schaeffler Technologies AG & Co. KG, 91074 Herzogenaurach (DE)
(72) Erfinder: FUGEL, Wolfgang, 90453 Nürnberg (DE); KRUHÖFFER, Wolfram, 91086 Aurachtal (DE)
(86) Internationale Anmeldenummer: PCT/DE2019/100511
(87) Internationale Veröffentlichungsnummer: WO 2020/001684

(56) Entgegenhaltungen:
- DE-A1-102005 061 102
- DE-A1-102010 033 122
- JP-A- 2011 027 213

## Beschreibung

### Gebiet der Erfindung

Die Erfindung betrifft ein Axialwälzlager nach den oberbegriffsbildenden Merkmalen des Patentanspruchs 1, und sie ist insbesondere vorteilhaft an einem Axialnadel- oder Axialrollenlager realisierbar.

### Hintergrund der Erfindung

Aus der JP 2011 027 213 A ist ein Zylinderrollenlager bekannt, welches einen Außenring, einen Innenring sowie zwei Reihen Zylinderrollen aufweist. Die Zylinderrollen der einen Reihe sind in umfangsseitig zueinander benachbart angeordnet und zu Zylinderrollen der anderen Reihe axial nebeneinander angeordnet. Den Zylinderrollen einer jeden Reihe ist am Innenring eine gewölbte Laufbahn im Bereich eines der beiden Enden der Wälzkörper mit wenigstens einer umfangsseitig umlaufenden rillenförmigen Vertiefung ausgebildet.

Aus der DE 10 2010 033 122 A1 ist ein Axialwälzlager bekannt, dessen Lagerscheiben als lastabhängig einfedernde Tellerfedern ausgeführt sind. Die Laufbahnen sind dabei ebenflächig ausgebildet, weisen jedoch lokal jeweils einen zum Wälzbereich hin konvexen Wölbungsabschnitt auf, das heißt, dass die Wölbungen beider Lagerscheiben zueinander gerichtet sind. Dies führt dazu, dass die Wälzkörper im unbelasteten oder niedrig belasteten Zustand reibungsarme kurze Kontakte zu den Laufbahnen aufweisen, wobei mit zunehmender Last die Wölbungsabschnitte einfedern, so dass die Kontaktlänge der Wälzkörper zunimmt.

Durch die im Niedriglastbereich kurzen und damit reibungsarmen Kontaktlängen zwischen den Wälzkörpern und den Laufbahnbereichen der Lagerscheiben können die Wälzkörper kinematisch günstig auf den Laufbahnen abrollen. Hierüber wird auch vermieden, dass es, wie bei bisher üblichen ungewölbten Lagerscheiben der Fall, im nahezu lastfreien Zustand zu einem kinematisch unsauberen Abrollen der Wälzkörper auf den Laufbahnen bis hin zum Stillstand der Wälzkörper bzw. des gesamten Wälzkörperkranzes kommt und die Wälzkörper nur noch über die Laufbahnen gleiten. Durch die mit zunehmender Last beginnende Einfederung bis hin zur kompletten Einfederung bei hinreichend hoher Last wird eine mit der Lagerlast zunehmende tragende Länge der Wälzkontakte erzielt, mithin ist also die Tragfähigkeit des Lagers stets gegeben.

Es hat sich jedoch herausgestellt, dass es aufgrund des elastischen Verformungsverhaltens der Lagerscheiben bei hohen Lagerlasten nahe der Wälzkörperenden zu erhöhten Kontaktpressungen mit der jeweiligen Laufbahn kommen kann, die zu einer Erhöhung der Reibung und zur Reduzierung der Lagerlebensdauer führen. Des Weiteren ist gerade nahe der Wälzkörperenden die Unrundheit der Wälzkörper besonders groß, so dass diese Kontaktpressungen mitunter noch weiter vergrößert werden. Zudem kann dadurch auch die Geräuschentwicklung des Lagers ungünstig beeinflusst werden.

### Aufgabe der Erfindung

Ausgehend von den dargelegten Nachteilen des bekannten Standes der Technik liegt der Erfindung deshalb die Aufgabe zu Grunde, ein Axialnadel- bzw. Axialrollenlager zu konzipieren, bei dem aus dem elastischen Verformungsverhalten der Lagerscheiben bei hohen Lagerlasten resultierende erhöhte Kontaktpressungen der Wälzkörperenden zur jeweiligen Laufbahn vermieden werden, so dass es sich durch eine Reduzierung der Reibung und der Geräuschentwicklung sowie durch eine Erhöhung der Lagerlebensdauer auszeichnet.

### Beschreibung der Erfindung

Erfindungsgemäß wird diese Aufgabe bei einem Axialwälzlager nach dem Oberbegriff des Anspruchs 1 derart gelöst, dass die gewölbte Laufbahn jeweils im Bereich der beiden Enden der Wälzkörper jeweils mit wenigstens einer umlaufenden rillenförmigen Vertiefung versehen ist und die Lagerscheibe dabei eine derartig im Profilquerschnitt gewölbte Laufbahn aufweist, so dass die Wälzkörper im unbelasteten Zustand des Axialwälzlagers nur punktuell auf der Laufbahn aufliegen und im belasteten Zustand des Axialwälzlagers jedoch nahezu über die gesamte Länge der Wälzkörper auf der Laufbahn aufliegen.

Bevorzugte Ausgestaltungen und vorteilhafte Weiterbildungen des erfindungsgemäß ausgebildeten Axialwälzlagers werden in den Unteransprüchen beschrieben.

Danach ist es gemäß Anspruch 2 bei dem erfindungsgemäß ausgebildeten Axialwälzlager vorgesehen, dass die gewölbte Laufbahn im Bereich beider Enden der Wälzkörper mit rillenförmigen Vertiefungen ausgebildet ist, deren maximale Tiefe zwischen 0,1% und 15% der Materialstärke der Lagerscheibe beträgt. Als besonders geeignet hinsichtlich Stabilität und Einfederungsverhalten der Lagerscheibe haben sich dabei eine Tiefe der rillenförmigen Vertiefungen zwischen 0,2% und 10% der Materialstärke der Lagerscheibe sowie ein gerundeter Profilquerschnitt der Vertiefungen erwiesen.

Nach Anspruch 3 ist es ein weiteres Merkmal des erfindungsgemäß ausgebildeten Axialwälzlagers, dass bei der äußeren rillenförmigen Vertiefung der Innenradius der Vertiefung dem Abstand der äußeren Stirnseite der Wälzkörper zur Rotationsachse des Axialwälzlagers abzüglich eines variablen Distanzmaßes entspricht, wobei das Distanzmaß zwischen 5% und 45% des Durchmessers der Wälzkörper beträgt und sich auf eine Mittelposition der Wälzkörper in ihren Käfigtaschen und auf eine Mittelposition des Lagerkäfigs in seiner Führung an der Lagerscheibe bezieht. Angelehnt an diese Ausführung entspricht nach Anspruch 4 bei der inneren rillenförmigen Vertiefung der Außenradius der Vertiefung dem Abstand der inneren Stirnseite der Wälzkörper zur Rotationsachse des Axialwälzlagers zuzüglich eines Distanzmaßes, wobei das Distanzmaß ebenfalls zwischen 5% und 45% des Durchmessers der Wälzkörper beträgt.

Ein weiteres Merkmal des erfindungsgemäß ausgebildeten Axiallagers ist es nach Anspruch 5, dass die Breite der rillenförmigen Vertiefungen in der gewölbten Laufbahn jeweils mindestens 5% des Durchmessers der Wälzkörper beträgt und größer ist als das zwischen 5% und 45% des Durchmessers der Wälzkörper betragende Distanzmaß. Hierdurch soll gewährleistet werden, dass auch bei einem Axialspiel der Wälzkörper innerhalb ihrer Käfigtaschen sowie bei einem Führungsspiel des Lagerkäfigs auf der Lagerscheibe unerwünschte Kontaktpressungen im Bereich der Wälzkörperenden vermieden werden.

Durch Anspruch 6 wird es außerdem noch vorgeschlagen, dass die Übergänge der rillenförmigen Vertiefungen zur gewölbten Laufbahn im Abwälzbereich der Wälzkörper jeweils einen verrundeten Konturverlauf aufweisen. Auch hierdurch wird erreicht, dass unerwünschte Kontaktpressungen zwischen den Wälzkörperenden und der Laufbahn sicher vermieden werden.

Eine zweckmäßige Weiterbildung des erfindungsgemäß ausgebildeten Axialwälzlagers ist es nach Anspruch 7 des Weiteren, dass die Wälzkörper im Bereich ihrer beiden Enden zusätzlich ein deren Durchmesser reduzierendes Übergangsprofil ihrer Mantelfläche zu deren Stirnseiten aufweisen. Nach Anspruch 8 wird dieses Übergangsprofil dabei durch jeweils einen im Profilquerschnitt logarithmisch abfallenden Abschnitt sowie aus jeweils einer sich daran anschließenden und an den Stirnseiten der Wälzkörper endenden Verrundung gebildet. Gemäß Anspruch 9 ist es dabei besonders vorteilhaft, wenn die Übergänge von den Mantelflächen zu den logarithmisch abfallenden Abschnitten sowie von diesen zu den Verrundungen an den Enden der Wälzkörper kantenfrei, vorzugsweise krümmungsstetig, ausgebildet sind.

Schließlich wird es als vorteilhafte Ausgestaltung des erfindungsgemäß ausgebildeten Axialwälzlagers durch Anspruch 10 noch vorgeschlagen, dass es zwei der zuvor beschriebenen Lagerscheiben mit rillenförmigen Vertiefungen in deren Laufbahnen aufweist.

Das erfindungsgemäß ausgebildete Wälzlager weist somit gegenüber dem Stand der Technik gemäß DE 10 2010 033 122 A1, wo lediglich eine aus der Lauffläche der Lagerscheibe konvex herausragende Wölbung vorgesehen ist, den Vorteil auf, dass bei dessen Lagerscheibe zwei umlaufende rillenförmige Vertiefungen in der Wälzkörperlaufbahn im Bereich der Nadel- oder Rollenenden vorgesehen sind. Durch diese erfindungsgemäße spezifische Laufbahnoder Laufflächengeometrie wird vorteilhaft bei hoher Lagerlast eine zu hohe Kontaktpressung nahe der Wälzkörperenden vermieden, da die Wälzkörperenden durch die Vertiefungen in der Laufbahn freigestellt sind. Während es sich bei bekannten Axialwälzlagern mit gewölbten Laufbahnen herausgestellt hat, dass es bei vollständigem Einfedern des zentralen konvexen Wölbungsabschnitts zu einer elastischen Aufwölbung der Lagerscheibe im Bereich der Wälzkörperenden kommt, was zu deutlichen Kontaktpressungsspitzen an den Wälzkörperenden führen kann, sind durch die Ausbildung der rillenförmigen, an das Einfederungsverhalten angepassten Laufbahnvertiefungen diese Kontaktpressungsspitzen selbst bei hoher Last ausgeschlossen. Auch die eine Lagerscheibe respektive die beiden Lagerscheiben des erfindungsgemäßen Axialwälzlagers federn bei hinreichend hoher Last vollständig ein, gleichwohl werden unerwünschte Kontaktpressungen im Bereich der Wälzkörperenden vermieden.

Es stellt sich durch die erfindungsgemäße Ausbildung der Lagerscheiben mit den beiden Vertiefungen und die damit erreichbare Entlastung der Wälzkörperenden auch bei hoher Lagerlast ein gleichmäßigerer Verlauf der Kontaktpressung über die Wälzkörperlänge ein. Die erfindungsgemäße Ausgestaltung führt im Hochlastbereich zu einer Reduzierung von Reibung und Schlupf und damit zu einer Verschleißreduzierung und zu einer Lebensdauererhöhung. Auch stellt sich eine größere Laufruhe des Axialwälzlagers ein und die Stabilität der Laufscheiben wird durch die als Versteifungssicken wirkenden Vertiefungen erhöht.

### Kurze Beschreibung der Zeichnungen

Eine bevorzugte Ausführungsform des erfindungsgemäß ausgebildeten Axialwälzlagers wird nachfolgend unter Bezugnahme auf die beigefügten Zeichnungen näher erläutert. Dabei zeigen:
- Figur 1: eine Teilansicht eines Querschnittes durch ein erfindungsgemäß ausgebildetes Axialwälzlager im unbelasteten Zustand;
- Figur 2: die Teilansicht des Querschnittes nach Figur 1 im belasteten Zustand des erfindungsgemäß ausgebildeten Axialwälzlagers;
- Figur 3: eine vergrößerte Darstellung der Einzelheit X des erfindungsgemäß ausgebildeten Axialwälzlagers nach Figur 1;
- Figur 4: eine vergrößerte Darstellung der Einzelheit Y des erfindungsgemäß ausgebildeten Axialwälzlagers nach Figur 1.

### Ausführliche Beschreibung der Zeichnungen

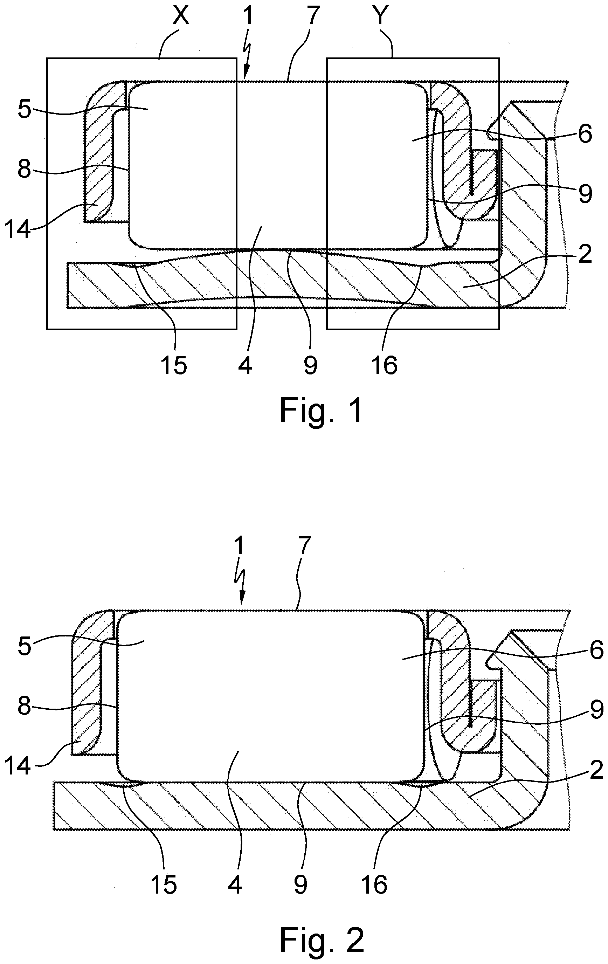

Aus den Figuren 1 und 2 geht jeweils ein als Axialnadellager ausgebildetes Axialwälzlager 1 hervor, welches aus einer ringförmigen Lagerscheibe 2 sowie aus einer Vielzahl, als Lagernadeln ausgebildeter sowie in Kreisform nebeneinander angeordneter Wälzkörper 4 besteht, die auf der Laufbahn 3 der Lagerscheibe 2 abrollen und durch einen von nicht näher bezeichneten Rastnasen an einem ebenfalls nicht näher bezeichneten Bord fixierten Lagerkäfig 14 in gleichmäßigen Abständen zueinander gehalten werden. Deutlich sichtbar weist die Lagerscheibe 2 dabei eine umlaufende, im Profilquerschnitt gewölbte Laufbahn 3 auf, so dass die Wälzkörper 4 im in Figur 1 gezeigten unbelasteten Zustand des Axialwälzlagers 1 nur punktuell auf der Laufbahn 3 aufliegen, im in Figur 2 gezeigten belasteten Zustand des Axialwälzlagers 1 jedoch nahezu über die gesamte Länge der Wälzkörper 4 auf der Laufbahn 3 aufliegen.

Um bei einem solchen Axialwälzlager bei hohen Lagerlasten eine erhöhte Kontaktpressung der Enden 5, 6 der Wälzkörper 4 zur Laufbahn 3 zu vermeiden, weist die gewölbte Laufbahn 3, wie in den Figuren 1 und 2 außerdem zu sehen ist, im Bereich der beiden Enden 5, 6 der Wälzkörper 4 erfindungsgemäß zwei umlaufende rillenförmige Vertiefungen 15, 16 auf, die mit einem gerundeten Profilquerschnitt ausgebildet sind.

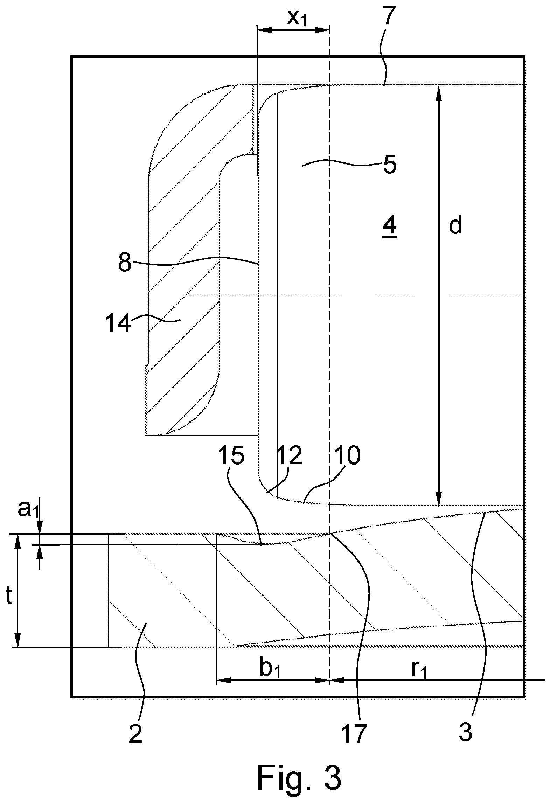

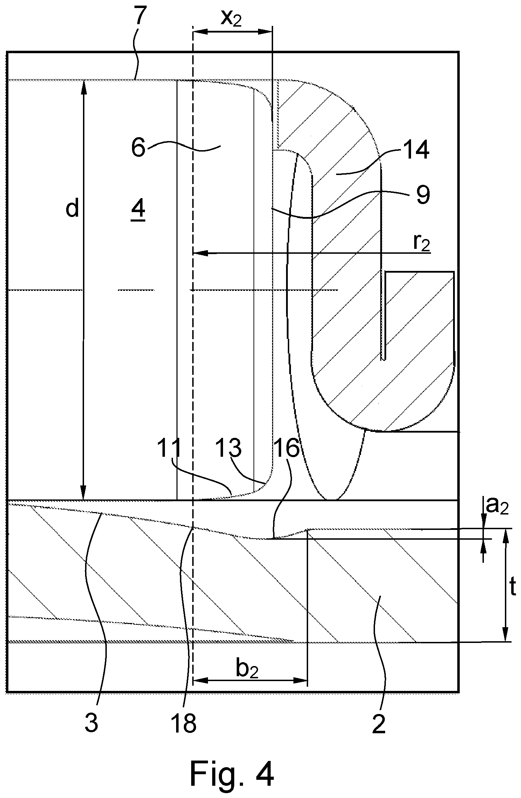

Aus den vergrößerten Darstellungen der in Figur 1 gekennzeichneten Einzelheiten X und Y gemäß den Figuren 3 und 4 ist dabei zumindest andeutungsweise erkennbar, dass die rillenförmigen Vertiefungen 15, 16 in der gewölbten Laufbahn 5 eine maximale Tiefe a₁, a₂ zwischen 0,1% und 15% der Materialstärke t der Lagerscheibe 2 aufweisen und dass die Breite b₁, b₂ der rillenförmigen Vertiefungen 15, 16 jeweils mindestens 5% des Durchmessers d der Wälzkörper 4 beträgt.

Der in Figur 3 sichtbare Innenradius r₁ der äußeren rillenförmigen Vertiefung 15 entspricht dabei dem Abstand der äußeren Stirnseite 8 der Wälzkörper 4 zur nicht näher dargestellten Rotationsachse des Axialwälzlagers 1 abzüglich eines Distanzmaßes x₁, welches zwischen 5% und 45% des Durchmessers d der Wälzkörper 4 beträgt. Der in Figur 4 angedeutete Außenradius r₂ der inneren rillenförmigen Vertiefung 16 entsprecht dagegen dem Abstand der inneren Stirnseite 9 der Wälzkörper 4 zur nicht näher dargestellten Rotationsachse des Axialwälzlagers 1 zuzüglich eines Distanzmaßes x₂, welches ebenfalls zwischen 5% und 45% des Durchmessers d der Wälzkörper 4 beträgt. In beiden Fällen ist die Breite b₁, b₂ der rillenförmigen Vertiefungen 15, 16 in der gewölbten Laufbahn 5, wie dargestellt, jeweils größer als das Distanzmaß x₁, x₂. Außerdem ist in den Figuren 3 und 4 zu sehen, dass die Übergänge 17, 18 der rillenförmigen Vertiefungen 15, 16 zur gewölbten Laufbahn 3 im Abwälzbereich der Wälzkörper 4 jeweils einen verrundeten Konturverlauf aufweisen.

Des Weiteren ist aus den Figuren 3 und 4 ersichtlich, dass die Wälzkörper 4 im Bereich ihrer beiden Enden 5, 6 zusätzlich ein deren Durchmesser d reduzierendes Übergangsprofil ihrer Mantelfläche 7 zu deren Stirnseiten 8, 9 aufweisen. Dieses Übergangsprofil an den Enden 5, 6 der Wälzkörper 4 wird deutlich sichtbar durch jeweils einen im Profilquerschnitt logarithmisch abfallenden Abschnitt 10, 11 sowie aus jeweils einer sich daran anschließenden und an den Stirnseiten 8, 9 der Wälzkörper 4 endenden Verrundung 12, 13 gebildet, wobei die Übergänge von den Mantelflächen 7 zu den logarithmisch abfallenden Abschnitten 10, 11 sowie von diesen zu den Verrundungen 12, 13 an den Enden 5, 6 der Wälzkörper 4 kantenfrei, bevorzugt krümmungsstetig, ausgebildet sind.

### Bezugszahlenliste

- 1: Axialwälzlager
- 2: Lagerscheibe
- 3: Laufbahn
- 4: Wälzkörper
- 5: Ende von 4
- 6: Ende von 4
- 7: Mantelfläche von 4
- 8: Stirnseite von 4
- 9: Stirnseite von 4
- 10: Abschnitt an 5
- 11: Abschnitt an 6
- 12: Radius an 5
- 13: Radius an 6
- 14: Lagerkäfig
- 15: Vertiefung
- 16: Vertiefung
- 17: Übergang von 15 zu 3
- 18: Übergang von 16 zu 3

- a₁: Tiefe von 15
- a₂: Tiefe von 16
- b₁: Breite von 15
- b₂: Breite von 16
- r₁: Innenradius von 15
- r₂: Außenradius von 16
- d: Durchmesser von 4
- t: Materialstärke von 2
- x₁: Distanzmaß
- x₂: Distanzmaß

## Patentansprüche

1. Axialwälzlager (1), bestehend aus zumindest einer ringförmige Lagerscheibe (2), die eine umlaufende, im Profilquerschnitt gewölbte Laufbahn (3) aufweist, sowie aus einer Vielzahl, als Lagernadeln oder Lagerrollen ausgebildeter sowie in Kreisform nebeneinander angeordneter Wälzkörper (4), die auf der Laufbahn (3) der Lagerscheibe (2) abrollen und durch einen Lagerkäfig (14) in gleichmäßigen Abständen zueinander gehalten werden, **dadurch gekennzeichnet, dass** die gewölbte Laufbahn (3) jeweils im Bereich der beiden Enden (5, 6) der Wälzkörper (4) jeweils mit wenigstens einer umlaufenden rillenförmigen Vertiefung (15, 16) versehen ist, wobei die Lagerscheibe (2) dabei eine derartig im Profilquerschnitt gewölbte Laufbahn (3) aufweist, so dass die Wälzkörper (4) im unbelasteten Zustand des Axialwälzlagers (1) nur punktuell auf der Laufbahn (3) aufliegen und im belasteten Zustand des Axialwälzlagers (1) jedoch nahezu über die gesamte Länge der Wälzkörper (4) auf der Laufbahn (3) aufliegen.

2. Axialwälzlager (1) nach Anspruch 1, **dadurch gekennzeichnet, dass** die gewölbte Laufbahn (3) im Bereich beider Enden (5, 6) der Wälzkörper (4) mit rillenförmigen Vertiefungen (15, 16) ausgebildet ist, deren maximale Tiefe (a₁, a₂) jeweils zwischen 0,1% und 15%, vorzugsweise zwischen 0,2% und 10% der Materialstärke (t) der Lagerscheibe (2) beträgt.

3. Axialwälzlager (1) nach Anspruch 2, **dadurch gekennzeichnet, dass** der Innenradius (r₁) der äußeren rillenförmigen Vertiefung (15) dem Abstand der äußeren Stirnseite (8) der Wälzkörper (4) zur Rotationsachse des Axialwälzlagers (1) abzüglich eines Distanzmaßes (x₁), welches zwischen 5% und 45% des Durchmessers (d) der Wälzkörper (4) beträgt.

4. Axialwälzlager (1) nach Anspruch 2, **dadurch gekennzeichnet, dass** der Außenradius (r₂) der inneren rillenförmigen Vertiefung (16) dem Abstand der inneren Stirnseite (9) der Wälzkörper (4) zur Rotationsachse des Axialwälzlagers (1) zuzüglich eines Distanzmaßes (x₂) entspricht, welches zwischen 5% und 45% des Durchmessers (d) der Wälzkörper (4) beträgt.

5. Axialwälzlager (1) nach den Ansprüchen 2 bis 4, **dadurch gekennzeichnet, dass** die Breite (b₁, b₂) der rillenförmigen Vertiefungen (15, 16) in der gewölbten Laufbahn (5) jeweils mindestens 5% des Durchmessers (d) der Wälzkörper (4) beträgt und größer ist als das zwischen 5% und 45% des Durchmessers (d) der Wälzkörper (4) betragende Distanzmaß (x₁, x₂).

6. Axialwälzlager (1) nach den Ansprüchen 2 bis 5, **dadurch gekennzeichnet, dass** die Übergänge (17, 18) der rillenförmigen Vertiefungen (15, 16) zur gewölbten Laufbahn (3) im Abwälzbereich der Wälzkörper (4) jeweils einen verrundeten Konturverlauf aufweisen.

7. Axialwälzlager (1) nach Anspruch 1, **dadurch gekennzeichnet, dass** die Wälzkörper (4) im Bereich ihrer beiden Enden (5, 6) zusätzlich ein deren Durchmesser (d) reduzierendes Übergangsprofil ihrer Mantelfläche (7) zu deren Stirnseiten (8, 9) aufweisen.

8. Axialwälzlager (1) nach Anspruch 7, **dadurch gekennzeichnet, dass** das Übergangsprofil an den Enden (5, 6) der Wälzkörper (4) durch jeweils einen im Profilquerschnitt logarithmisch abfallenden Abschnitt (10, 11) sowie aus jeweils einer sich daran anschließenden und an den Stirnseiten (8, 9) der Wälzkörper (4) endenden Verrundung (12, 13) gebildet wird.

9. Axialwälzlager (1) nach Anspruch 8, **dadurch gekennzeichnet, dass** die Übergänge von den Mantelflächen (7) zu den logarithmisch abfallenden Abschnitten (10, 11) sowie von diesen zu den Verrundungen (12, 13) an den Enden (5, 6) der Wälzkörper (4) kantenfrei, vorzugsweise krümmungsstetig, ausgebildet sind.

10. Axialwälzlager (1) nach Anspruch 1, **dadurch gekennzeichnet, dass** es zwei Lagerscheiben (2) mit den Merkmalen der Ansprüche 2 bis 9 aufweist.

## Claims

1. A thrust rolling bearing (1) consisting of at least one annular bearing disc (2), which has a circumferential raceway (3) curved in profile cross section, as well as a plurality of rolling elements (4) formed as bearing needles or bearing rollers and arranged beside one another in circular form, which roll on the raceway (3) of the bearing disc (2) and are kept at uniform distances from one another by a bearing cage (14), **characterised in that** the curved raceway (3) is formed with at least one circumferential groove-shaped depression (15, 16), in the region of each of the two ends (5, 6) of the rolling elements (4), the bearing disc (2) having here a raceway (3) curved in the profile cross section in such a way that the rolling elements (4) in the unloaded state of the thrust rolling bearing (1) rest only at points on the raceway (3) and in the loaded state of the thrust rolling bearing (1), however, rest practically over the entire length of the rolling elements (4) on the raceway (3).

2. The thrust rolling bearing (1) according to claim 1, **characterised in that** the curved raceway (3) in the region of the two ends (5, 6) of the rolling elements (4) is formed with groove-shaped depressions (15, 16), the maximum depth of which (a₁, a₂) is in each case between 0.1% and 15%, preferably between 0.2% and 10%, of the material thickness (t) of the bearing disc (2).

3. The thrust rolling bearing (1) according to claim 2, **characterised in that** the inner radius (r₁) of the outer groove-shaped depression (15) is equal to the distance of the outer end face (8) of the rolling elements (4) from the rotation axis of the thrust rolling bearing (1) minus a distance measure (x₁) which is between 5% and 45% of the diameter (d) of the rolling elements (4).

4. The thrust rolling bearing (1) according to claim 2, **characterised in that** the outer radius (r₂) of the inner groove-shaped depression (16) is equal to the distance of the inner end face (9) of the rolling elements (4) from the rotation axis of the thrust rolling bearing (1) plus a distance measure (x₂) which is between 5% and 45% of the diameter (d) of the rolling elements (4).

5. The thrust rolling bearing (1) according to claims 2 to 4, **characterised in that** the width (b₁, b₂) of the groove-shaped depressions (15, 16) in the curved raceway (5) is in each case at least 5% of the diameter (d) of the rolling elements (4) and is greater than the distance measure (x₁, x₂), which is between 5% and 45% of the diameter (d) of the rolling elements (4).

6. The thrust rolling bearing (1) according to claims 2 to 5, **characterised in that** the transitions (17, 18) of the groove-shaped depressions (15, 16) to the curved raceway (3) in the rolling region of the rolling elements (4) each have a rounded contour.

7. The thrust rolling bearing (1) according to claim 1, **characterised in that** the rolling elements (4) in the region of their two ends (5, 6) additionally have a transition profile of their outer surface (7) to their end faces (8, 9), the transition profile reducing their diameter (d).

8. The thrust rolling bearing (1) according to claim 7, **characterised in that** the transition profile at the ends (5, 6) of the rolling elements (4) is formed in each case by a logarithmically sloping portion (10, 11) in the profile cross section and by rounded portions (12, 13) connecting thereto and ending at the end faces (8, 9) of the rolling elements (4).

9. The thrust rolling bearing (1) according to claim 8, **characterised in that** the transitions from the outer surfaces (7) to the logarithmically sloping portions (10, 11) and from the logarithmically sloping portions to the rounded portions (12, 13) at the ends (5, 6) of the rolling elements (4) are formed in an edge-free manner, preferably with a continuous curvature.

10. The thrust rolling bearing (1) according to claim 1, **characterised in that** it has two bearing discs (2) with the features of claims 2 to 9.

## Revendications

1. Butée axiale à roulement (1), constituée d'au moins un disque de butée annulaire (2) qui présente un chemin de roulement (3) circonférentiel courbé en section transversale profilée, ainsi que d'une pluralité d'éléments de roulement (4) agencés adjacents de manière circulaire, conçus comme des aiguilles de roulement ou des galets de roulement qui roulent sur le chemin de roulement (3) du disque de butée (2) et sont maintenus à des distances uniformes les uns des autres par le biais d'une cage de butée (14), **caractérisée en ce que** le chemin de roulement (3) courbé est doté respectivement dans la zone des deux extrémités (5, 6) des éléments de roulement (4), respectivement d'au moins un évidement (15, 16) circonférentiel en forme de rainure, le disque de butée (2) présentant à cet effet un chemin de roulement (3) courbé en section transversale profilée, de façon que les éléments de roulement (4), à l'état non chargé de la butée axiale à roulement (1), reposent uniquement ponctuellement sur le chemin de roulement (3) et, à l'état chargé de la butée axiale à roulement (1), reposent cependant sur le chemin de roulement (3) pratiquement sur toute la longueur des éléments de roulement (4).

2. Butée axiale à roulement (1) selon la revendication 1, **caractérisée en ce que** le chemin de roulement (3) courbé est formé dans la zone des deux extrémités (5, 6) des éléments de roulement (4) avec des évidements (15, 16) en forme de rainure, dont la profondeur maximale (a₁, a₂) est comprise respectivement entre 0,1 % et 15 %, de préférence entre 0,2 % et 10 % de l'épaisseur de matériau (t) du disque de butée (2).

3. Butée axiale à roulement (1) selon la revendication 2, **caractérisée en ce que** le rayon interne (r₁) de l'évidement (15) en forme de rainure externe est égal à la distance de la face avant (8) externe des éléments de roulement (4) jusqu'à l'axe de rotation de la butée axiale à roulement (1) moins une mesure de distance (x₁) qui est comprise entre 5 % et 45 % du diamètre (d) des éléments de roulement (4).

4. Butée axiale à roulement (1) selon la revendication 2, **caractérisée en ce que** le rayon externe (r₂) de l'évidement (16) en forme de rainure interne est égal à la distance de la face avant (9) interne des éléments de roulement (4) jusqu'à l'axe de rotation de la butée axiale à roulement (1) moins une mesure de distance (x₂) qui est comprise entre 5 % et 45 % du diamètre (d) des éléments de roulement (4).

5. Butée axiale à roulement (1) selon les revendications 2 à 4, **caractérisée en ce que** la largeur (b₁, b₂) des évidements (15, 16) en forme de rainure dans le chemin de roulement (5) courbé est respectivement égale à au moins 5 % du diamètre (d) des éléments de roulement (4) et est supérieure à la mesure de distance (x₁, x₂) égale à entre 5 % et 45 % du diamètre (d) des éléments de roulement (4).

6. Butée axiale à roulement (1) selon les revendications 2 à 5, **caractérisée en ce que** les transitions (17, 18) des évidements (15, 16) en forme de rainure jusqu'au chemin de roulement (3) courbé présentent dans la zone de roulement des éléments de roulement (4) respectivement un tracé de contour arrondi.

7. Butée axiale à roulement (1) selon la revendication 1, **caractérisée en ce que** les éléments de roulement (4) présentent dans la zone de leurs deux extrémités (5, 6) en plus un profil de transition réduisant leur diamètre (d) de leur surface enveloppante (7) jusqu'à leurs faces avant (8, 9).

8. Butée axiale à roulement (1) selon la revendication 7, **caractérisée en ce que** le profil de transition au niveau des extrémités (5, 6) des éléments de roulement (4) est formé par le biais respectivement d'une section (10, 11) à pente logarithmique descendante en section transversale profilée ainsi qu'à partir respectivement d'un arrondissement (12, 13) se raccordant à celle-ci et se terminant au niveau des faces avant (8, 9) des éléments de roulement (4).

9. Butée axiale à roulement (1) selon la revendication 8, **caractérisée en ce que** les transitions des surfaces enveloppantes (7) jusqu'aux sections (10, 11) à pente logarithmique descendante ainsi que de celles-ci jusqu'aux arrondissements (12, 13) au niveau des extrémités (5, 6) des éléments de roulement (4) sont formées sans arête, de préférence avec une courbure continue.

10. Butée axiale à roulement (1) selon la revendication 1, **caractérisée en ce qu'**elle présente deux disques de butée (2) présentant les caractéristiques des revendications 2 à 9.
